# EUROPEAN PATENT APPLICATION

(11) **EP 2 062 855 A1**
(43) Date of publication of application: **27.05.2009**
(21) Application number: 07806723.8
(22) Date of filing: 05.09.2007
(51) Int. Cl.: C01B 33/02, B01J 19/00, B03B 5/28, B82B 3/00, C09K 11/08

(54) **SEMICONDUCTOR NANOPARTICLE AND METHOD FOR PRODUCING THE SAME**

(30) Priority: 15.09.2006 JP 2006250713
(71) Applicant: Konica Minolta Medical & Graphic, Inc., Hino-shi, Tokyo 191-8511 (JP)
(72) Inventor: GOAN, Kazuyoshi, Hino-shi, Tokyo 191-8511 (JP); OKADA, Hisatake, Hino-shi, Tokyo 191-8511 (JP); FURUSAWA, Naoko, Hino-shi, Tokyo 191-8511 (JP)
(74) Representative: Alton, Andrew
(86) International application number: PCT/JP2007/067280
(87) International publication number: WO 2008/032619

(57) **Abstract**

Disclosed is a method to produce a semiconductor nanoparticle which is excellent in monodispersibility and productivity. This method is **characterized in that** two or more kinds of semiconductor nanoparticles having different average particle diameters are dispersed in a solvent and mixed together, and then subjected to size classification.

## Description

### FIELD OF THE INVENTION

The present invention relates to a monodispersed semiconductor nanoparticle and the method of producing the same.

### BACKGROUND OF THE INVENTION

In recent years, it has attracted attention that a nanostructure crystal of a II-VI group semiconductor particle represented by Si or Ge semiconductor, or of a porous silicon. A nanostructure crystal means a nano-sized crystal grain of 1 - 100 nanometers, and, generally, also referred to as a nanoparticle or a nanocrystal in abbreviation.

In a II-VI group semiconductor, when II-VI group semiconductors of the abovementioned nanostructure crystal and of a bulk-like crystal are compared, the semiconductor of a nanostructure crystal shows more preferable light absorption property and luminescent property. This would be because the II-VI group semiconductor of a nanostructure crystal has a larger band gap than that of the semiconductor of a bulk-like crystal due to a quantum size effect. Namely, in the II-VI group semiconductor of a nanostructure crystal, the energy gap would increase with decreasing particle diameter, due to the quantum size effect.

The production method of a semiconductor nanoparticle is classified roughly into a solid phase method, a liquid phase method and a gas phase method. As a production method of an inorganic nanoparticle having narrow particle diameter distribution, a liquid phase method and a gas phase method, each of which is a buildup processes, are predominantly used. Of these, a liquid phase method is an excellent method when the particle contains two or more constituting elements since the composition of the particle can be chemically homogeneous. The liquid phase process is further classified into a coprecipitation method, a reverse micelle method, and a hot soap method (for example, refer to Patent Documents 1.).

However, the semiconductor nanoparticle obtained by the abovementioned method cannot fully utilize the characteristics of the semiconductor nanoparticle since it shows a large particle diameter distribution. For this reason, trials to obtain a monodispersed semiconductor nanoparticles have been conducted by separating-extracting semiconductor nanoparticles having only specified particle diameter from the semiconductor nanoparticles immediately after the preparation having a large particle diameter distribution due to a chemical method to precisely carry out particle size separation. The following methods have been reported, so far: the electrophoresis separation method using the variation of surface charge of the nanoparticles due to particle diameter difference; the exclusion chromatography using the difference of the holding time due to the particle size; the size-selective sedimentation method using the difference of the dispersibility in the organic solvent due to the difference in the particle size; and the size-selective photoetching technique in which monodispersed particle diameter is obtained by using the dissolution of metal chalcogenide semiconductor via oxidation-dissolution by photoirradiation under existence of dissolved oxygen.

In the above preparation methods, the control or classification of the particle diameter is carried out after preparing semiconductor nanoparticles having a large particle diameter distribution. As a method of preparing nanoparticles already having a monodispersed particle diameter when the particles are prepared, the reverse micelle method using an amphipathic molecule may be cited. In this method, nanoparticles having uniform particle diameters are prepared by forming reverse micelles in a non-polar solvent, which are then used as reactive sites, and by controlling the sizes of the reactive sites. This is a method which has been most widely conducted, and is the easiest method to control the particle diameter. When semiconductor nanoparticles are irradiated with exciting light, the semiconductor nanoparticles emit fluorescent light. The wavelength of the fluorescent light is determined by the particle diameter. Namely, if particle diameter distribution is large, a fluorescence spectrum with narrow full width at half maximum (FWHM) cannot be obtained. Accordingly, in order to prepare the semiconductor nanoparticles which emit relatively monochrome fluorescent light, particle diameter distribution has been desired to be smaller.

The size-selective photoetching technique in which monodispersed particle diameter is obtained by using the dissolution of metal chalcogenide semiconductor via oxidation-dissolution by photoirradiation under existence of dissolved oxygen has been utilized till now as a method to obtain monodispersed semiconductor nanoparticles from the semiconductor nanoparticles having widely distributed particle diameters.

However, none of the above methods have provided semiconductor nanoparticles having sufficiently monodispersed particle diameters and, further, the low productivity has been another problem. (for example, refer to Patent Documents 2-4.).
Patent Document 1: Japanese Patent Application Publication Open to Public Inspection (hereafter referred to as JP-A) No. 2005-325419
Patent Document 2: JP-A No. 2004-8982
Patent Document 3: JP-A No. 2004-90155
Patent Document 4: JP-A No. 2004-195339

### DISCLOSURE OF THE INVENTION

### PROBLEM TO BE SOLUVED BY THE INVENTION

The present invention is made in view of the abovementioned problem, and an object of the present invention is to provide a method of producing semiconductor nanoparticles exhibiting excellent monodispersibility and productivity.

### MEANS TO SOLVE THE PROBLEM

The object of the present invention is achieved by the following structures.
1. A method of producing a semiconductor nanoparticle comprising the subsequent steps of:
   mixing two or more kinds of semiconductor nanoparticles each kind having an average particle diameter different from each other while each kind of the semiconductor nanoparticle is dispersed in a solvent; and
   carrying out size classification of the semiconductor nanoparticles.
2. The method of Item 1, wherein the method includes the step of:
   separating the semiconductor nanoparticles dispersed in the solvent via centrifugation.
3. The method of Item 1 or 2, wherein the method includes the step of:
   separating the semiconductor nanoparticles dispersed in the solvent via centrifugation after a dispersion liquid is concentrated.
4. The method of Item 3, wherein the method includes the step of:
   separating the semiconductor nanoparticles dispersed in the solvent via centrifugation after a dispersion liquid is concentrated by vacuum drying.
5. The semiconductor nanoparticle produced by the method of any one of Items 1 to 4, wherein the semiconductor nanoparticle has a core/shell structure.

### EFFECTS OF THE INVENTION

According to the above method of the present invention, a method of producing semiconductor nanoparticles exhibiting excellent monodispersibility and productivity can be provided.

### BEST MODE TO CARRY OUT THE INVENTION

The inventions of Items 1 - 4 has a common feature that, in the production process of a semiconductor nanoparticle, after mixing two or more kinds of semiconductor nanoparticles each kind having an average particle diameter different from an average particle diameter of other kind while each kind of the semiconductor nanoparticle is dispersed in a solvent, size classification of the semiconductor nanoparticles is carried out. Here, the average particle diameter of each kind of semiconductor nanoparticle is preferably different by 20 - 100% from the average particle diameter of other kind. When the difference is 20% or less, the effect of monodispersing treatment may be only limited, while, when the difference is 100% or more, no improvement in the productivity due to the size classification may be obtained.

The present inventors have examined the above problem, and have developed a method of producing a monodispersed inorganic nanoparticle having a narrow distribution of particle diameter, in which, semiconductor nanoparticles are produced via a method such as a reverse micelle method or a hydrothermal method, other than a hot soap method; the semiconductor nanoparticles are mixed while the nanoparticles are in a dispersed state; and size classification is carried out, whereby a nanoparticle having a particle diameter distribution of 5% or less can be obtained. Here, "monodisperse" means that the standard deviation of the particle diameter distribution of a nanoparticle is 10% or less.

Hereafter, the present invention and the constituting elements thereof will be explained in detail.

### <Formation material of semiconductor nanoparticle>

The semiconductor nanoparticle relating the present invention can be formed using various semiconductor materials. For example, the semiconductor compounds of group IV, group II-VI and group III-V of the periodic table are applicable.

Among the group II-VI semiconductors, specifically, MgS, MgSe, MgSe, MgTe, CaS, CaSe, CaTe, SrS, SrSe, SrTe, BaS, BaSe, BaTe, ZnS, ZnSe, ZnTe, CdS, CdSe, HgS, HgSe, and HgTe can be cited.

Among the group III-V semiconductors, preferably applicable are GaAs, GaN, GaPGaSb, InGaAs, InP, InN, InSb, InAs, AlAs, AlP, AlSb and AlS.

Among the group IV semiconductors, Ge, Pb and Si are specifically suitable.

In the present invention, the fluorescent semiconductor particle is preferably a particle having a core/shell structure. In this case, the semiconductor nanoparticle is preferably a semiconductor nanoparticle having a core/shell structure composed of a core particle formed of a semiconductor particle and a shell layer covering the core particle, and the chemical compositions of the core particle and the shell layer is preferably different.

Hereafter, the core particle and the shell layer will be explained.

### <Core particle>

Various semiconductor materials may be used as a semiconductor material used for a core particle. Examples of a semiconductor material include: MgS, MgSe, MgTe, CaS, CaSe, CaTe, SrS, SrSe, SrTe, BaS, BaTe, ZnS, ZnSe, ZnTe, CdS, CdSe, CdTe, GaAs, GaP, GaSb, InGaAs, InP, InN, InSb, InAs, AlAs, AlP, AlSb, AlS, PbS, PbSe, Ge, Si and a mixture thereof. In the present invention, specifically preferable semiconductor material is Si.

In addition, if necessary, a dope material such as Ga may also be included in an infinitesimal quantity.

The average diameter of the core particle relating to the present invention is preferably 1 - 10 nm.

Here, the "average diameter" of the core relating to the present invention means the accumulation volume particle diameter at an accumulation of 50%, namely, volume median diameter Dv50, determined by a laser scattering method.

### <Shell layer>

Various semiconductor materials may be used as a semiconductor material used for a shell layer. Examples of a semiconductor material include: ZnO, ZnS, ZnSe, ZnTe, CdO, CdS, CdSe, CdTe, MgS, MgSe, GaS, GaN, GaP, GaAs, GaSb, InAs, InN, InP, InSb, AlAs, AlN, AlP, AlSb and a mixture thereof.

In the present invention, specifically preferable semiconductor material is SiO₂ and ZnS.

The shell layer relating the present invention may not cover the entire surface of a core particle thoroughly, unless a core particle is selectively exposed to give a damage.

### <Production method of semiconductor nanoparticle>

Various conventionally well known methods may be applied for the production of the fluorescent semiconductor particle of the present invention.

As a production method of a liquid phase method, for example, a coprecipitation method, a sol-gel method, a homogeneous precipitation method, a reduction methodmay be cited. In addition, a reverse micelle method, a supercritical hydrothermal crystallization method may be cited as an excellent method to produce a nanoperticle (for example, refer to JP-A No. 2002-322468, JP-A No. 2005-239775, JP-A No. 10-310770 and JP-A No. 2000-104058).

As a production method of a gas phase method, for example, the following methods may be cited: (1) a method in which an opposing semiconductor raw material is evaporated by a first high temperature plasma generated between the electrodes, followed by passing the semiconductor material through a second high temperature plasma generated by electrode less discharge under an atmosphere of a reduced pressure (for example, refer to JP-A No. 6-279015), and (2) a method to separate nanoparticles composed of a semiconductor material from the anode formed of a semiconductor raw material with electrochemical etching (for example, refer to Japanese Translation of PCT International Application Publication No. 2003-515459) and a laser abrasion method (for example, refer to JP-A 2004-356163). Further, a method to carry out a gas phase reaction of a raw material gas under a reduced pressure to synthesize a powder containing particles may be preferably utilized.

As a production method of a fluorescent semiconductor particle of the present invention, a liquid phase method is specifically preferable.

### [Size classification method]

The present invention is characterized in that size classification is carried out after two or more kinds of semiconductor nanoparticles each kind having an average diameter different from each other are mixed while each kind of the semiconductor nanoparticle is dispersed in a solvent.

In the present invention, it is preferable to include a producing process in which semiconductor nanoparticles dispersed in a solvent is separated from the dispersion liquid via centrifugation. Also, it is preferable to include a producing process in which semiconductor nanoparticles dispersed in a solvent is separated from the dispersion liquid via centrifugation after the dispersion liquid of the semiconductor nanoparticles is concentrated. Further, it is preferable to include a producing process in which semiconductor nanoparticles dispersed in a solvent is separated from the dispersion liquid via centrifugation after the dispersion liquid of the semiconductor nanoparticles is concentrated by a vacuum drying method.

Hereafter, the Size classification method relating the present invention will be described.

A dispersion liquid in which the semiconductor nanoparticles produced by one of the abovementioned methods are dispersed is vacuum dried to concentrate to an appropreate amount, whereby a part of the nanoparticles are aggregated. The dispersion liquid is then subjected to centrifugation. The precipitate is well dried to measure the mass of obtained particles and the particle diameter distribution.

On the other hand, the supernatant liquid is further vacuum dried to an appropriate amount, and the aggregated nanoparticles are separated centrifugation. Size classification is carry out by repeating this operation.

In the above method, various solvents may be used. For example, preferably used are alcohol solvents such as methanol and ethanol; and ketone solvents such as acetone and methyethyl ketone.

The condition for vacuum drying is preferably the temperature of 100 - 150 °C and the degree of vacuum of 0.001 - 0.01 MPa.

### EXAMPLES

Hereafter, the present invention will be explained in more detail using examples, however, the present invention is not limited thereto.

### (Preparation of Si particles for the core)

Into 100 ml of toluene, tetraoctylammonium bromide (TOAB) was added, followed by well stirring, and the 92 µl of SiCl₄ was added dropwise. After stirring for one hour, a reducing agent (2ml of THF solutions of lithium aluminum hydride (1M)) was added dropwise for 2 minutes or more. The product was left for 3 hours and then 20 ml of methanol was added to deactivate excess reducing agent, whereby silicon nanoparticles were obtained in the organic solvent.

The particle diameters of the silicon particles can be controlled by varying the mixing ratio of SiCl₄ and TOAB. Dispersion liquids containing particles of 4 kinds of average diameters were obtained by varying the ratio of SiCl₄:TOAB in the range of 1:3 - 1:100.

| | SiCl₄: TOAB | Mean particle diameter |
|---|---|---|
| Si core A | 1:3 | 7 nm |
| Si core B | 1:10 | 5 nm |
| Si core C | 1:50 | 3 nm |
| Si core D | 1:100 | 2 nm |

### (Coating of SiO₂ layer for shell)

Silicon nanoparticles were dispersed in a liquid prepared by mixing colloidal silica (PL-3 produced by FUSO CHEMICAL CO., Ltd.) and potassium hydroxide in pure water to form 1500 ml of a liquid.

These dispersion liquids each were held for 5 minutes in a spray porolysis apparatus to coat the particles with SiO₂ shell layers. Thus Si/SiO₂ nanoparticle powders A - D were obtained.

### (Size classification method 1)

Into 100 ml of the dispersion liquid, 10 ml of methanol anhydrous was added, followed by well stirring, then a part of the particles aggregated. The aggregated particles were separated via centrifugation. The precipitate was well dried to measure the mass of obtained particles and the particle diameter distribution.

The supernatant liquid was further added with 10 ml of methanol anhydrous to separate the coagurated nanoparticles via centrifugation. Size classification is carry out by repeating this operation.

### (Size classification method 2)

By vacuum drying, 100 ml of the dispersion liquid was condensed to 95 ml, whereby a part of the particles aggregated. The aggregated particles were separated via centrifugation. The precipitate was well dried to measure the mass of obtained particles and the particle diameter distribution.

The supernatant liquid was further vacuum dried to condense the liquid to 90 ml. The aggregated nanoparticles were separated via centrifugation. Size classification was carry out by repeating this operation.

Si core/SiO₂ nanoparticles A - D were mixed as shown in Table 1. The size classification was carried out according to Size classification methods 1 and 2. In Table 1, the sizes (average diameters and particle diameter distributions) and yields before classification of Si core/SiO₂ nanoparticles A - D and mixed particles thereof are shown. The sizes (average diameters and particle diameter distributions) and yields obtained after classification of Si core/SiO₂ nanoparticles A - D and mixed particles thereof are shown in Tables 2 - 4. The classification was carried out at most by four stages, and each stage was designated as Classification 1, Classification 2, Classification 3 and Classification 4 in the order of decreasing average particle diameter.

**Table 1**

| Sample No. | Combination | Ratio | Before classification | | |
|---|---|---|---|---|---|
| | | | Particle diameter | | Yield [µg] |
| | | | Average [nm] | Distribution [%] | |
| 1 | A | | 7 | 15 | 11 |
| 2 | B | | 5 | 18 | 11 |
| 3 | C | | 3 | 20 | 10 |
| 4 | D | | 2 | 25 | 9 |
| 5 | A+B | 0.5+0.5 | 6 | 20 | 11 |
| 6 | B+C | 0.5+0.5 | 4 | 25 | 11 |
| 7 | C+D | 0.5+0.5 | 2.5 | 30 | 10 |

**Table 2**

| Sample No. | Classification method | Classification 1 | | Classification 2 | | Remarks |
|---|---|---|---|---|---|---|
| | | Particle diameter | | Particle diameter | | |
| | | Average [nm] | Distribusion [%] | Average [nm] | Distribusion [%] | |
| 1 | 1 | 11 | 7 | 8 | 10 | Comp. |
| 2 | 1 | 9 | 10 | 6 | 12 | Comp. |
| 3 | 1 | 7 | 12 | 4 | 15 | Comp. |
| 4 | 1 | 4 | 15 | 2 | 20 | Comp. |
| 5 | 1 | 11 | 3 | 8 | 3 | Inv. |
| 6 | 1 | 9 | 3 | 5 | 4 | Inv. |
| 7 | 1 | 8 | 4 | 6 | 4 | Inv. |
| 1 | 2 | 11 | 5 | 8 | 8 | Comp. |
| 2 | 2 | 9 | 8 | 6 | 10 | Comp. |
| 3 | 2 | 7 | 10 | 4 | 13 | Comp. |
| 4 | 2 | 4 | 12 | 2 | 18 | Comp. |
| 5 | 2 | 13 | 2 | 10 | 3 | Inv. |
| 6 | 2 | 10 | 2 | 8 | 3 | Inv. |
| 7 | 2 | 8 | 3 | 6 | 3 | Inv. |

| | | | | | | |
|---|---|---|---|---|---|---|
| Inv.: This invention, Comp.: Comparative sample | | | | | | |

**Table 3**

| Sample No. | Classification method | Classification 3 | | Classification 4 | | Remarks |
|---|---|---|---|---|---|---|
| | | Particle diameter | | Particle diameter | | |
| | | Average [nm] | Distr ibusion [%] | Average [nm] | Distri busion [%] | |
| 1 | 1 | 5 | 12 | - | - | Comp. |
| 2 | 1 | 4 | 15 | - | - | Comp. |
| 3 | 1 | - | - | - | - | Comp. |
| 4 | 1 | - | - | - | - | Comp. |
| 5 | 1 | 5 | 4 | 2 | 5 | Inv. |
| 6 | 1 | 4 | 5 | 2 | 5 | Inv. |
| 7 | 1 | 4 | 5 | 2 | 5 | Inv. |
| 1 | 2 | 5 | 10 | 2 | 12 | Comp. |
| 2 | 2 | 4 | 12 | 2 | 15 | Comp. |
| 3 | 2 | 3 | 15 | - | - | Comp. |
| 4 | 2 | - | - | - | - | Comp. |
| 5 | 2 | 6 | 3 | 3 | 4 | Inv. |
| 6 | 2 | 5 | 3 | 3 | 4 | Inv. |
| 7 | 2 | 4 | 4 | 2 | 4 | Inv. |

| | | | | | | |
|---|---|---|---|---|---|---|
| Inv.: This invention, Comp.: Comparative sample | | | | | | |

**Table 4**

| Sample No. | Classification method | Yield [µg] | | | | | | Total yield of after *** / yield before *** | Remarks |
|---|---|---|---|---|---|---|---|---|---|
| | | Before *** | *** 1 | *** 2 | *** 3 | *** 4 | Total yield of after *** | | |
| 1 | 1 | 11 | 2 | 4 | 2 | - | 8 | 73% | Comp. |
| 2 | 1 | 11 | 2 | 4 | 1 | - | 7 | 64% | Comp. |
| 3 | 1 | 10 | 2 | 4 | - | - | 6 | 60% | Comp. |
| 4 | 1 | 9 | 2 | 4 | - | - | 6 | 67% | Comp. |
| 5 | 1 | 11 | 2 | 4 | 4 | 1 | 11 | 100% | Inv. |
| 6 | 1 | 11 | 2 | 4 | 4 | 1 | 11 | 100% | Inv. |
| 7 | 1 | 10 | 1 | 3 | 4 | 2 | 10 | 100% | Inv. |
| 1 | 2 | 11 | 2 | 4 | 2 | 1 | 9 | 82% | Comp. |
| 2 | 2 | 11 | 2 | 4 | 1 | 1 | 8 | 73% | Comp. |
| 3 | 2 | 10 | 2 | 4 | 1 | - | 7 | 70% | Comp. |
| 4 | 2 | 9 | 2 | 5 | - | - | 7 | 78% | Comp. |
| 5 | 2 | 11 | 2 | 4 | 4 | 1 | 11 | 100% | Inv. |
| 6 | 2 | 11 | 2 | 4 | 4 | 1 | 11 | 100% | Inv. |
| 7 | 2 | 10 | 1 | 3 | 4 | 2 | 10 | 100% | Inv. |

| | | | | | | | | | |
|---|---|---|---|---|---|---|---|---|---|
| ***: Classification Inv.: This invention, Comp.: Comparative sample | | | | | | | | | |

From the results shown in Tables 1 - 4, it was found that, by conducting the size classification according to the method of the present invention, the particle size distribution at each stage was reduced while almost no reduction of yield due to the size classification was attained.

## Claims

1. A method of producing a semiconductor nanoparticle comprising the subsequent steps of:
mixing two or more kinds of semiconductor nanoparticles each kind having an average particle diameter different from each other while each kind of the semiconductor nanoparticle is dispersed in a solvent; and
carrying out size classification of the semiconductor nanoparticles.

2. The method of claim 1, wherein the method includes the step of:
separating the semiconductor nanoparticles dispersed in the solvent via centrifugation.

3. The method of claim 1 or 2, wherein the method includes the step of:
separating the semiconductor nanoparticles dispersed in the solvent via centrifugation after a dispersion liquid is concentrated.

4. The method of claim 3, wherein the method includes the step of:
separating the semiconductor nanoparticles dispersed in the solvent via centrifugation after the dispersion liquid is concentrated by vacuum drying.

5. The semiconductor nanoparticle produced by the method of any one of claims 1 to 4, wherein the semiconductor nanoparticle has a core/shell structure.
